# FASCICULE DE BREVET EUROPEEN

(11) **EP 3 148 777 B1**
(45) Date de publication et mention de la délivrance du brevet: **20.11.2019**
(21) Numéro de dépôt: 15732784.2
(22) Date de dépôt: 20.05.2015
(51) Int. Cl.: B29C 49/48, F16L 37/23

(54) **SYSTÈME DE CONNEXION POUR CONNECTER DEUX DISPOSITIFS AVEC COMMUNICATION FLUIDIQUE ENTRE LES DEUX DISPOSITIFS**
VERBINDUNGSSYSTEM ZUM VERBINDEN ZWEIER VORRICHTUNGEN MIT EINER FLUIDVERBINDUNG ZWISCHEN DEN BEIDEN VORRICHTUNGEN
CONNECTION SYSTEM FOR CONNECTING TWO DEVICES WITH FLUID CONNECTION BETWEEN THE TWO DEVICES

(30) Priorité: 28.05.2014 FR 1454879
(43) Date de publication de la demande: 05.04.2017
(73) Titulaire: Parker Hannifin Manufacturing France SAS, 74112 Annemasse (FR)
(72) Inventeur: TARISSAN, Fabrice, F-74370 Villaz (FR)
(74) Mandataire: Delorme, Nicolas
(86) Numéro de dépôt international: PCT/FR2015/051331
(87) Numéro de publication internationale: WO 2015/181473

(56) Documents cités:
- GB-A- 2 347 171
- US-A- 4 679 956
- US-A- 5 211 501
- US-A1- 2005 271 763

## Description

La présente invention concerne un système de connexion, permettant une connexion avec transport fluidique entre deux dispositifs.

Un système de connexion comprend classiquement une partie mâle, destinée à être raccordée à un premier dispositif, et une partie femelle, destinée à être raccordée à un deuxième dispositif.

La partie mâle et la partie femelle sont destinées à être connectées l'une à l'autre, avec possibilité de transport de fluide entre ces deux parties, afin d'autoriser une communication de fluide entre les dispositifs auxquels les parties mâle et femelle sont raccordées.

Pour permettre l'interchangeabilité des dispositifs ainsi connectés, il est prévu une connexion amovible entre la partie mâle et la partie femelle.

Le cas échéant, l'opération de déconnexion et de connexion de la partie mâle et de la partie femelle peut être fréquemment répétée.

Afin d'optimiser les temps de production, l'opération de déconnexion et de connexion entre la partie mâle et la partie femelle doit donc être la plus aisée et la plus prompte possible.

Or, cette opération de déconnexion et de connexion est le plus souvent réalisée de façon manuelle, et nécessite donc un effort humain susceptible de la ralentir. Il est donc nécessaire de limiter cet effort humain pour diminuer la durée de l'opération de déconnexion et de connexion.

Par ailleurs, la connexion entre la partie mâle et la partie femelle doit être la plus sécurisée possible pour éviter des effets délétères sur la productivité et la sécurité du personnel alentour.

Il est notamment connu du document GB2347171 un ensemble de verrouillage d'un axe permettant un changement rapide d'outil d'une ligne de thermoformage, correspondent au préambule de la revendication 1.

Aussi, la présente invention vise à pallier tout ou partie de ces inconvénients en proposant un système de connexion offrant une déconnexion et une connexion rapide et sécurisées d'une partie mâle et d'une partie femelle de ce système de connexion.

A cet effet, la présente invention a pour objet un système de connexion selon la revendication 1.

Ainsi, le système de connexion selon l'invention offre, par l'intermédiaire du piston entraînant les autres pièces, dont la partie mâle, et soumis de façon sélective à une force de pression, une connexion ou une déconnexion automatique, si bien que l'effort humain est limité, voire nul. Cela augmente conséquemment la rapidité d'exécution de l'opération de déconnexion et connexion de la partie mâle et de la partie femelle, ainsi que sa répétabilité.

De plus, l'appui simultané de l'organe d'entraînement contre la cavité et la saillie radiale en position de connexion permet un verrouillage sécurisé de la partie mâle à l'intérieur de la partie femelle, puisque seul un déplacement de la pièce d'entraînement, notamment du piston, de la position de connexion vers la position de déconnexion peut débloquer la partie mâle de la partie femelle.

Le système de connexion comprend des moyens de rappel conçus pour rappeler la pièce d'entraînement jusqu'à l'une des positions parmi la position de connexion et la position de déconnexion, de sorte que la translation de la pièce d'entraînement sous l'action de ladite force de rappel provoque un déplacement simultané de la partie mâle par rapport à la partie femelle.

Les moyens de rappel permettent de réaliser la connexion ou la déconnexion de la partie mâle et de la partie femelle en limitant également l'effort humain. Un avantage dans l'utilisation des moyens de rappel pour déplacer la pièce d'entraînement dans l'une des deux positions parmi la position de connexion et de déconnexion, tandis que le piston et la force de pression sont utilisés pour déplacer la pièce d'entraînement dans l'autre de ces deux positions réside dans le fait qu'un apport d'énergie n'est nécessaire que pour l'une de ces deux opérations, à savoir la mise sous pression du piston. Les moyens de rappel emmagasinent l'énergie lors de la mise en pression du piston, ce qui réduit avantageusement la durée d'un cycle de connexion déconnexion, les moyens de rappel restituant ensuite automatiquement cette énergie pendant l'opération inverse de connexion ou le cas échéant de déconnexion. En outre, les moyens de rappel assurent la répétabilité du positionnement relatif des parties mâle et femelle selon l'axe d'insertion de la partie mâle dans la partie femelle, en rattrapant le jeu de la pièce d'entraînement.

Selon un mode de réalisation, les moyens de rappel comprennent un ressort adapté pour rappeler la pièce d'entraînement dans la position de connexion.

Le système de connexion comprend des moyens de blocage conçus pour bloquer la pièce d'entraînement dans l'une des positions, parmi la position de connexion et la position de déconnexion, autre que celle dans laquelle la pièce d'entraînement tend à être rappelée par les moyens de rappel.

Le fait de disposer de moyens de blocage pour maintenir « armés » les moyens de rappel permet de s'affranchir de l'utilisation d'un apport d'énergie continu, comme une force de pression exercée en permanence sur le piston contre la force de rappel, pour maintenir la pièce d'entraînement dans la position opposée à celle dans laquelle la pièce d'entraînement tend à être maintenue par les moyens de rappel.

Les moyens de blocage comprennent une pièce de blocage, présentant une première surface d'appui, la pièce de blocage étant mobile entre une position de blocage, dans laquelle la première surface d'appui est en appui contre l'organe d'entraînement pour bloquer l'organe d'entraînement contre le premier côté de la saillie radiale, et une position de déblocage, dans laquelle la première surface d'appui est à distance de l'organe d'entraînement pour permettre le libre déplacement de l'organe d'entraînement à l'intérieur de l'alésage radial, et un organe élastique de rappel pour rappeler la pièce de blocage en position de blocage.

Ainsi, le blocage de la pièce d'entraînement est automatique. En d'autres termes, aucune action humaine n'est nécessaire pour bloquer la pièce d'entraînement.

De manière avantageuse, la pièce de blocage comprend une deuxième surface d'appui contre laquelle est destinée à venir en appui la partie mâle lors de son insertion dans la partie femelle, en vue de déplacer la pièce de blocage de la position de blocage à la position de déblocage.

L'avantage de cette caractéristique réside dans un déblocage automatique de la pièce d'entraînement, c'est-à-dire un déblocage résultant de la mise en place de la partie mâle sur la partie femelle et d'un début d'insertion de la partie mâle dans la partie femelle.

Selon une autre possibilité, les moyens de blocage comprennent une source d'énergie reliée à la chambre d'actionnement du système de connexion pour faire circuler dans cette chambre d'actionnement un fluide destiné à exercer sur le piston une force de pression opposée et supérieure à une force de rappel exercée par les moyens de rappel sur la pièce d'entraînement.

Ainsi, le système est simplifié et l'effort humain est nul puisqu'aucune amorce d'insertion de la partie mâle dans la partie femelle n'est nécessaire pour déclencher le déblocage. Il suffit de positionner la partie mâle relativement à la partie femelle.

Selon un mode de réalisation préféré, les moyens de commande comprennent un capteur conçu pour générer un signal de commande en vue de commander une arrivée ou une sortie d'un fluide à l'intérieur de la chambre d'actionnement dès que la partie mâle est positionnée en appui contre la partie femelle.

Ainsi, la génération du signal de commande est automatique. Aucune action humaine n'est nécessaire. Il suffit de positionner la partie mâle sur la partie femelle pour que soit déclenchée la cinématique de connexion. Cela réduit la durée d'exécution de l'opération de connexion.

Selon un mode de réalisation, les moyens de commande comprennent un bouton poussoir destiné à commander une arrivée ou une sortie d'un fluide à l'intérieur de la chambre d'actionnement.

Cette solution est plus économique qu'une solution avec capteur.

Selon un mode de réalisation préféré, la cavité comprend un pan incliné formant avec l'horizontale un premier angle α supérieur à 45° et la saillie radiale comprend un pan incliné opposé au pan incliné de la saillie radiale et formant avec la verticale un deuxième angle β supérieur à 0°.

Ainsi, il n'y a pas de jeu ; aucune déconnexion n'est possible en exerçant une traction sur la partie mâle. Seul un déplacement de la pièce d'entraînement, notamment du piston, de la position de connexion vers la position de déconnexion peut débloquer la partie mâle de la partie femelle.

Le cas échéant, une traction de la partie mâle a en effet pour conséquence que le pan de la cavité transmet à l'organe d'entraînement une force de réaction avec une composante essentiellement radiale, si bien que l'organe d'entraînement est plaqué contre le pan incliné de la saillie radiale, ce plan incliné lui opposant une force de réaction avec une composante verticale s'opposant au déplacement de l'organe d'entraînement. L'organe d'entraînement reste immobile, il n'y a aucun jeu, et la déconnexion est impossible, sauf à pousser la pièce d'entraînement vers le haut, vers la position de déconnexion, afin de chasser l'organe d'entraînement vers la cavité.

D'autres caractéristiques et avantages de la présente invention ressortiront clairement de la description détaillée ci-après de modes de réalisation de l'invention, donnés à titre d'exemple non limitatif, en référence aux dessins annexés dans lesquels :
- La figure 1 est une vue schématique en coupe d'un système de connexion selon un mode de réalisation de l'invention, partie mâle et partie femelle déconnectées,
- Les figures 2 à 10 sont des vues schématiques et en coupe d'un système de connexion selon un mode de réalisation de l'invention, illustrant différentes étapes de la cinématique de connexion de la partie mâle à l'intérieur de la partie femelle,
- Les figures 11 à 17 sont des vues schématiques et en coupe d'un système de connexion selon un mode de réalisation de l'invention, illustrant différentes étapes de la cinématique de déconnexion de la partie mâle et de la partie femelle,

- Les figures 18 à 25 sont des vues schématiques et en coupe d'un système de connexion selon un autre mode de réalisation de l'invention, illustrant différentes étapes de la cinématique de connexion de la partie mâle à l'intérieur de la partie femelle,
- La figure 26 est un détail des figures 10 et 25.

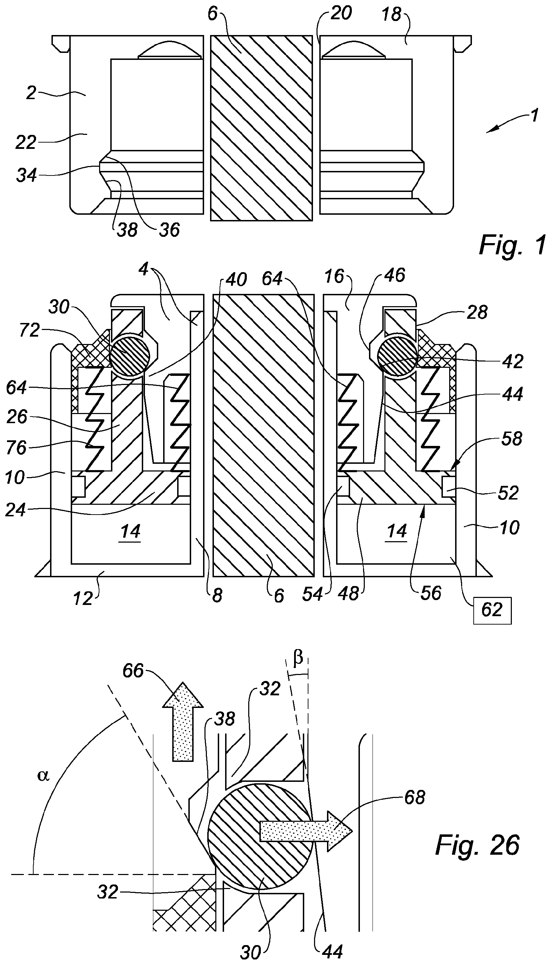

La figure 1 montre un système 1 de connexion selon un mode de réalisation de l'invention. Le système 1 de connexion est destiné à connecter deux dispositifs, par exemple un fond de moule destiné à la fabrication de récipients, notamment par soufflage, et le support de ce fond de moule, ce support étant aussi appelé sellette, en assurant une communication fluidique, notamment gaz ou liquide, entre ces deux dispositifs.

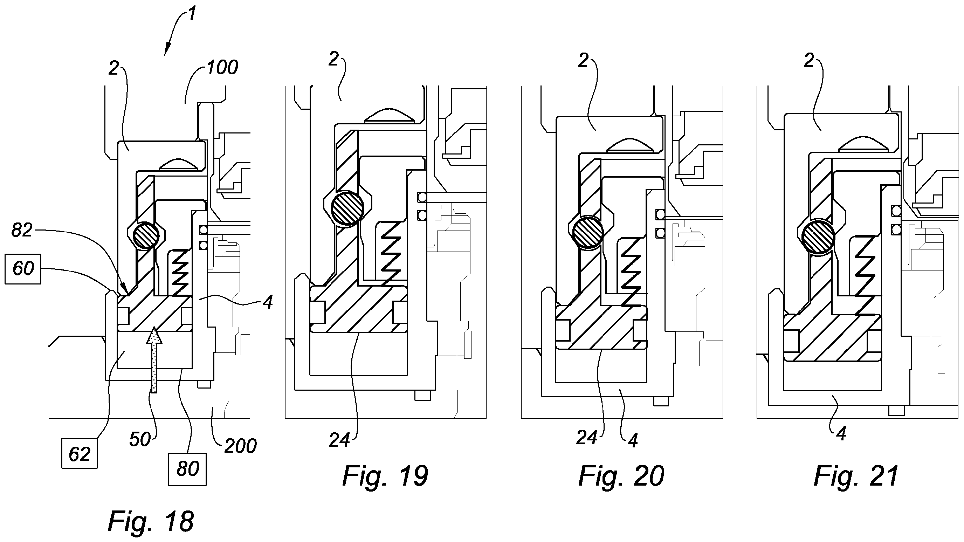

Comme cela est visible sur la figure 18, le système 1 de connexion comprend une partie mâle 2 pouvant être raccordée à un premier dispositif 100 parmi ces deux dispositifs, et une partie femelle 4 pouvant être raccordée à un deuxième dispositif 200 parmi ces deux dispositifs.

Comme cela est visible sur la figure 1, la partie mâle 2 et la partie femelle 4 peuvent chacune comprendre un conduit 6 traversant, les conduits 6 respectifs étant destinés à être agencés dans le prolongement l'un de l'autre lorsque la partie mâle 2 et la partie femelle 4 sont connectées, afin de permettre le transport d'un fluide entre les deux dispositifs raccordés par les parties mâle et femelle. Les conduits 6 peuvent être agencés au centre des parties mâle et femelle.

La partie femelle 4 peut comprendre une portion tubulaire 8 centrale délimitant le conduit 6, et une portion tubulaire 10 extérieure reliée à la portion tubulaire 8 centrale par une paroi 12, notamment une paroi de fond, de sorte que la portion tubulaire 8 centrale et la portion tubulaire 10 extérieure délimitent entre elles une chambre 14 d'actionnement. La chambre 14 d'actionnement peut comprendre un orifice (non représenté) d'entrée ou de sortie d'un fluide.

Selon l'exemple illustré sur la figure 1, la partie femelle 4 peut comprendre une pièce 16 de guidage agencée autour de la portion tubulaire 8 centrale, entre la portion tubulaire 8 centrale et la portion tubulaire 10 extérieure.

La partie mâle 2 peut comprendre comme ici une paroi 18 de fond, notamment en forme de disque, présentant en son centre un trou 20 formant le conduit 6. Une jupe 22 tubulaire s'étend depuis la paroi 18 de fond, notamment depuis un pourtour du disque, en délimitant un espace creux à l'intérieur duquel est destiné à recevoir la pièce 16 de guidage et la portion tubulaire 8 centrale.

La jupe 22 est destinée à être insérée entre la portion tubulaire 8 centrale et la portion tubulaire 10 extérieure, et plus particulièrement entre la pièce 16 de guidage et la portion tubulaire 10 extérieure.

La jupe 22, la pièce 16 de guidage, la portion tubulaire 8 centrale et la portion tubulaire 10 extérieure peuvent être sensiblement cylindriques.

Comme on peut le voir sur les figures, la partie femelle 4 comprend une pièce 24 d'entraînement. Cette pièce 24 d'entraînement comprend une portion tiroir 26 munie d'un alésage 28 radial.

La portion tiroir 26 peut être sensiblement cylindrique.

La portion tiroir 26 est destinée à coulisser entre la partie mâle 2 et la portion tubulaire 8 centrale, et plus précisément ici entre la jupe 22 et la pièce 16 de guidage, entre lesquelles la portion tiroir 26 s'interpose.

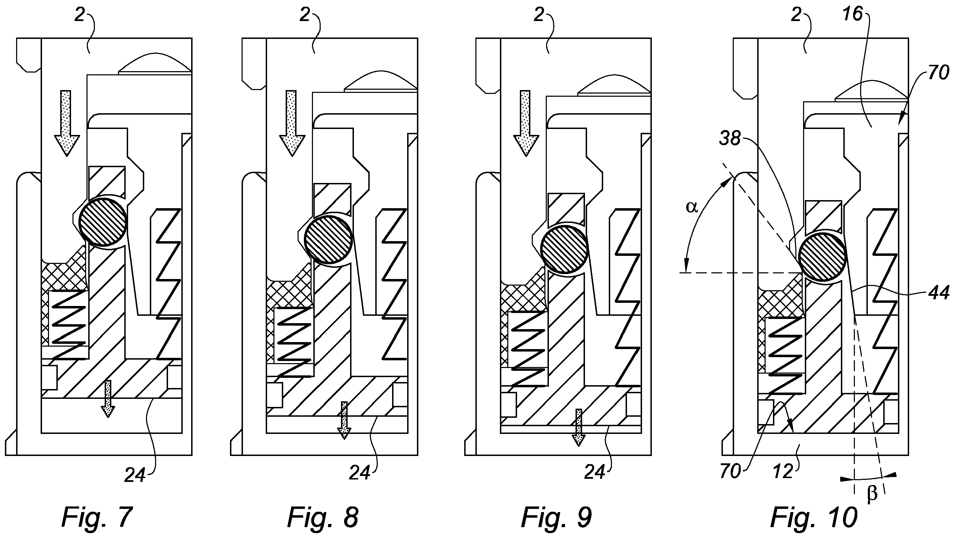

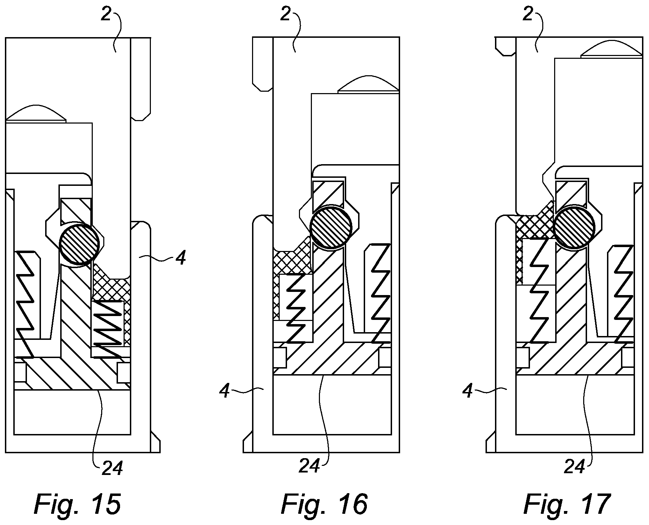

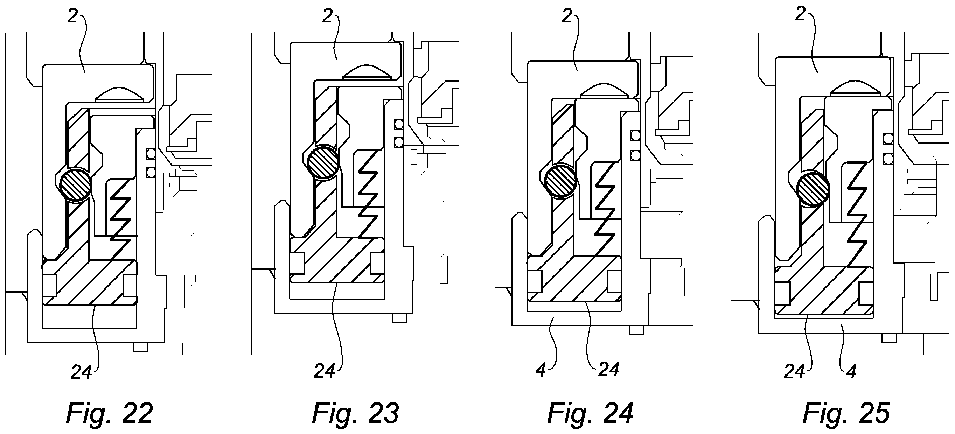

La pièce 24 d'entraînement est de fait mobile en translation le long d'un axe sensiblement parallèle à l'axe d'insertion de la partie mâle 2 dans la partie femelle 4, entre une position de déconnexion, représentée sur les figures 1, 3, 17 et 18, dans laquelle la partie mâle 2 et la partie femelle 4 peuvent être séparées l'une de l'autre, et une position de connexion, représentée sur les figures 10, 11 et 25, dans laquelle la partie mâle 2 et la partie femelle 4 sont connectées l'une à l'autre, la partie mâle 2 étant bloquée à l'intérieur de la partie femelle 4.

La partie femelle 4 comprend aussi un organe 30 d'entraînement agencé à l'intérieur de l'alésage 28 radial. L'alésage 28 radial peut comprendre à l'une de ses extrémités une butée 32, visible sur la figure 26, pour empêcher l'organe 30 d'entraînement de s'en extraire. L'organe 30 d'entraînement peut présenter une dimension, par exemple un diamètre, supérieure à la profondeur de l'alésage 28 radial, c'est-à-dire supérieure à une épaisseur de la portion tiroir 26. Par exemple, l'organe 30 d'entraînement est une bille.

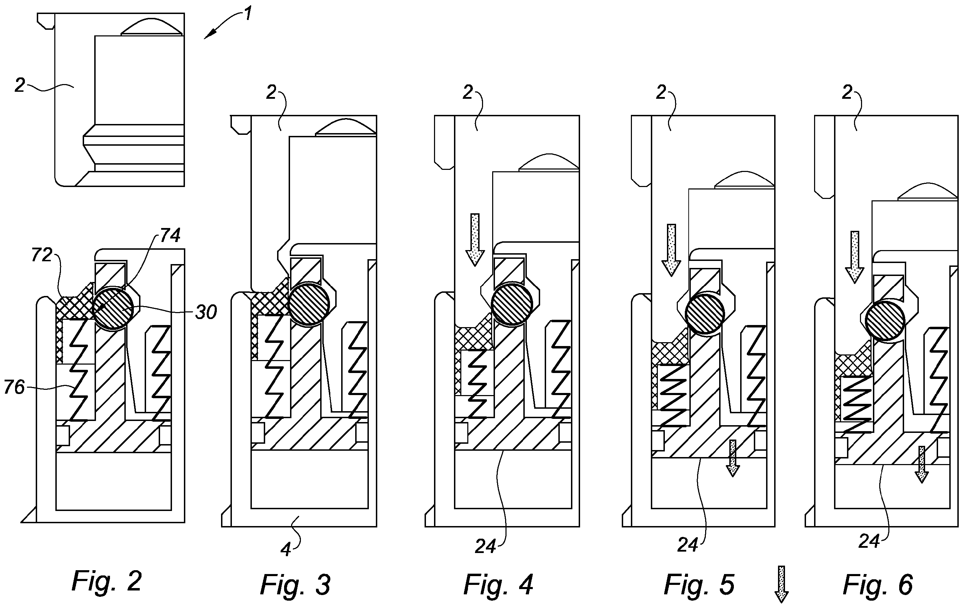

L'organe 30 d'entraînement est mobile radialement, en l'occurrence de façon sensiblement perpendiculaire à l'axe d'insertion de la partie mâle 2 dans la partie femelle 4, à l'intérieur de l'alésage 28 radial, entre une position extérieure, représentée notamment sur les figures 6 et 21, dans laquelle l'organe 30 d'entraînement peut être en appui contre la butée, et une position intérieure, visible par exemple sur la figure 18.

La partie mâle 2 comprend ici une cavité 34. Cette cavité 34 peut comprendre un ou plusieurs pans 36, 38 inclinés par rapport à l'axe d'insertion de la partie mâle 2 dans la partie femelle 4, par exemple un pan 36 supérieur et un pan 38 inférieur. La cavité 34 peut être ménagée sur un côté, par exemple un côté intérieur, de la jupe 22. Par exemple, la cavité 34 peut être une gorge.

La partie femelle 4, notamment la pièce 16 de guidage, comprend une saillie 40 radiale, qui peut présenter deux pans 42, 44 latéraux inclinés, par rapport à l'axe d'insertion de la partie mâle 2 dans la partie femelle 4. La saillie 40 radiale est destinée à faire face à la cavité 34 au cours de l'insertion de la partie mâle 2 dans la partie femelle 4 ou de l'extraction de la partie mâle 2 hors de la partie femelle 4. La saillie 40 radiale est destinée à chasser l'organe 30 d'entraînement dans la cavité 34 au cours de cette insertion ou extraction, c'est-à-dire au cours de la translation de la pièce 24 d'entraînement, de sorte que l'organe 30 d'entraînement vienne en appui contre un pan 36, 38 de la cavité 34.

La partie femelle 4, notamment la pièce 16 de guidage, peut comprendre une deuxième cavité 46, délimitée en partie par la saillie 40 radiale.

En position extérieure, l'organe 30 d'entraînement peut s'étendre dans la cavité 34 de la partie mâle 2, tandis qu'en position intérieure, l'organe 30 d'entraînement peut s'étendre dans la deuxième cavité 46 de la partie femelle 4.

Par ailleurs, en position de déconnexion, l'organe 30 d'entraînement est en appui contre un premier côté de la saillie 40 radiale, et en position de connexion, l'organe 30 d'entraînement est en appui simultané contre un pan 38 de la cavité 34 de la partie mâle 2 et un deuxième côté de la saillie 40 radiale, afin de bloquer la partie mâle 2 dans la partie femelle 4.

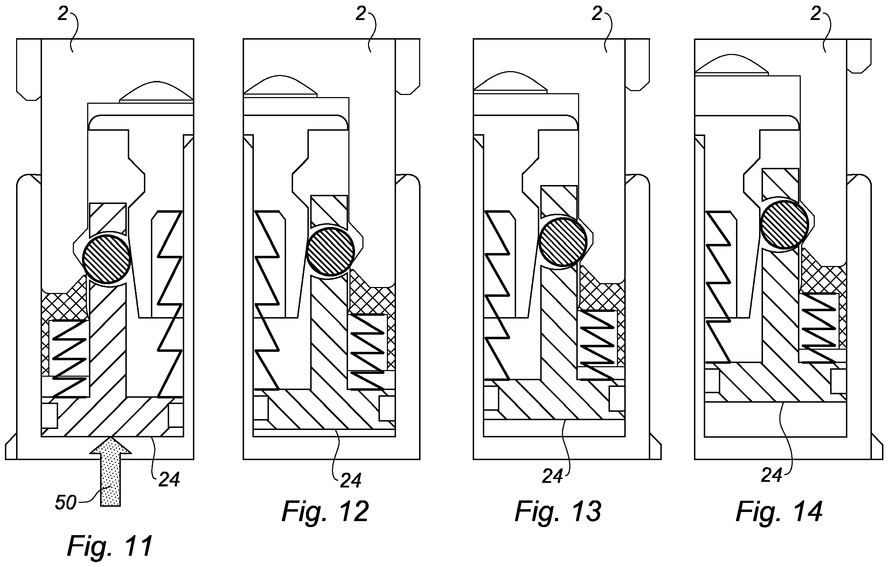

Comme on peut le voir sur les figures, la pièce 24 d'entraînement comprend un piston 48. Le piston 48 est conçu pour coulisser dans la chambre 14 d'actionnement, dont il épouse la forme, sous l'effet d'une force de pression, représentée par la flèche 50 sur les figures 11 et 18, générée par un fluide présent dans la chambre 14 d'actionnement.

Le piston 48 est rattaché à la portion tiroir 26 de manière à déplacer la pièce 24 d'entraînement jusqu'à l'une des positions parmi la position de connexion et la position de déconnexion sous l'effet de la force de pression.

Le piston 48 peut présenter un logement 52, par exemple une gorge, et un joint 54 d'étanchéité dynamique agencé à l'intérieur de ce logement 52.

Le piston 48 peut présenter une forme annulaire, et s'étendre autour de la portion tubulaire 8 centrale.

Le piston 48 s'étend dans un plan sensiblement perpendiculaire à l'axe d'insertion de la partie mâle 2 dans la partie femelle 4, si bien que les efforts exercés sur le piston 48 permettent de tracter ou pousser la partie mâle 2 dans ou hors de la partie femelle 4.

Selon l'exemple illustré sur la figure 1, le piston 48 comprend une face 56 inférieure obturant la chambre 14 d'actionnement, et une face 58 supérieure depuis laquelle s'étend la portion tiroir 26.

Le système 1 de connexion comprend en outre des moyens de commande pour déclencher l'application de la force de pression sur le piston 48.

Les moyens de commande peuvent comprendre un capteur 60, représenté schématiquement sur la figure 18, conçu pour générer un signal de commande en vue de commander une arrivée ou une sortie d'un fluide à l'intérieur de la chambre 14 d'actionnement dès que la partie mâle 2 est positionnée en appui contre la partie femelle 4.

Les moyens de commande peuvent comprendre un bouton 62 poussoir, représenté schématiquement sur la figure 1 et sur la figure 18, destiné à commander une arrivée ou une sortie d'un fluide à l'intérieur de la chambre 14 d'actionnement.

Comme on peut le voir sur les figures 1 à 25, le système 1 de connexion comprend avantageusement des moyens de rappel conçus pour rappeler la pièce 24 d'entraînement jusqu'à l'une des positions parmi la position de connexion et la position de déconnexion, de sorte que la translation de la pièce 24 d'entraînement sous l'action de ladite force de rappel provoque un déplacement simultané de la partie mâle 2 par rapport à la partie femelle 4.

Les moyens de rappel peuvent comprendre un ressort 64 adapté pour rappeler la pièce 24 d'entraînement dans la position de connexion, comme cela est illustré sur les figures 1 à 25. Le ressort 64 relie ici la pièce 16 de guidage et le piston 48, en particulier la face 58 supérieure du piston 48.

Les moyens de rappel, notamment le ressort 64, permettent de rattraper le jeu fonctionnel de la pièce 24 d'entraînement et du piston 48 qui lui est associé. Ce faisant, les moyens de rappel contribuent à la répétabilité du positionnement relatif des parties mâle et femelle selon l'axe d'insertion de la partie mâle dans la partie femelle.

Comme cela est visible sur les figures 10 et 26, on notera que le pan 38 incliné inférieur de la cavité 34 de la partie mâle 2 forme avantageusement avec l'horizontale un premier angle a, supérieur à 45°, et que le pan 44 incliné inférieur de la saillie 40 radiale forme avantageusement avec la verticale un deuxième angle β, supérieur à 0°, si bien que ces pans 38, 44 inclinés sont destinés à se faire sensiblement face lorsque la pièce 24 d'entraînement est dans la position de connexion.

Par ailleurs, en position de connexion, lorsque l'organe 30 d'entraînement appuie simultanément contre le pan incliné inférieur de la cavité 34 et le pan incliné inférieur de la saillie 40 radiale, comme cela est visible sur les figures 10, 25 et 26, l'alésage 28 radial exerce également un appui sur l'organe 30 d'entraînement pour maintenir l'organe 30 d'entraînement contre le pan 38 incliné inférieur de la cavité 34.

Ainsi, il n'y a pas de jeu pour l'organe 30 d'entraînement, ce qui contribue à la répétabilité du positionnement relatif des parties mâle et femelle selon l'axe d'insertion de la partie mâle dans la partie femelle. Aucune déconnexion n'est possible en exerçant une traction sur la partie mâle 2. Seul un déplacement de la pièce 24 d'entraînement, notamment du piston 48, de la position de connexion vers la position de déconnexion peut débloquer la partie mâle 2 de la partie femelle 4, comme cela sera décrit plus en détails ci-après.

Une traction de la partie mâle 2, représentée par la flèche 66 de la figure 26, a pour conséquence que le pan 38 inférieur de la cavité 34 transmet à l'organe 30 d'entraînement une force de réaction avec une composante essentiellement radiale 68, si bien que l'organe 30 d'entraînement est plaqué contre le pan 44 incliné de la saillie 40 radiale au lieu d'être déplacé vers le haut.

En particulier, le pan38 incliné inférieur de la cavité 34 de la partie mâle 2 et le pan 44 incliné inférieur de la saillie 40 radiale peuvent être sensiblement parallèles, c'est-à-dire que la somme des premier et deuxième angles α, β peut être de l'ordre de 90°.

On notera également que le pan 44 inférieur de la saillie 40 radiale est conformé de sorte qu'une partie de l'organe 30 d'entraînement, dans la position de connexion, fasse saillie hors de l'alésage 28 radiale afin de bloquer la partie mâle 2 dans la partie femelle 4.

Par ailleurs, le pan 42 supérieur de la saillie 40 radiale pénètre davantage dans la partie femelle 4 que le pan 44 inférieur de la saillie 40 radiale, si bien qu'en position de déconnexion, l'organe 30 d'entraînement en appui contre le pan 42 supérieur ne fait pas saillie hors de l'alésage 28 radial vers la partie mâle 2, ce qui permet de séparer la partie mâle 2 de la partie femelle 4.

Comme cela est représenté sur la figure 10, le système 1 de connexion peut comprendre une surface 70 de butée pour arrêter la course du piston 48 ou la course de la partie mâle 2 lorsque la partie mâle 2 est entraînée en insertion dans la partie femelle 4 par la pièce 24 d'entraînement. Cette surface 70 de butée peut être une surface supérieure de la pièce 16 de guidage, contre laquelle est destinée à venir en appui une surface inférieure de la paroi de fond de la partie mâle 2, ou une surface de la paroi 12 de fond de la partie femelle 4, contre laquelle le piston 48 peut être destiné à venir en appui.

Le système 1 de connexion peut avantageusement comprendre des moyens de blocage conçus pour bloquer la pièce 24 d'entraînement dans l'une des positions, parmi la position de connexion et la position de déconnexion, autre que celle dans laquelle la pièce 24 d'entraînement tend à être rappelée par les moyens de rappel.

Selon les exemples illustrés sur les figures, les moyens de rappel tendent à maintenir la pièce 24 d'entraînement en position de connexion, tandis que les moyens de blocage sont adaptés pour maintenir la pièce 24 d'entraînement dans la position de déconnexion.

Selon un premier mode de réalisation, visible sur les figures 1 à 17, les moyens de blocage comprennent une pièce 72 de blocage, présentant une première surface 74 d'appui, visible sur la figure 2, et un organe 76 élastique de rappel, reliant ici la pièce 72 de blocage et le piston 48, notamment la face supérieure du piston 48.

La pièce 72 de blocage est mobile entre une position de blocage, visible par exemple sur les figures 1, 2 et 17, dans laquelle la première surface 74 d'appui est en regard de l'alésage 28 radiale et du premier côté de la saillie 40 radiale, le cas échéant de la deuxième cavité 46, et en appui contre l'organe 30 d'entraînement qu'elle bloque ainsi contre le premier côté de la saillie 40 radiale, le cas échéant dans la deuxième cavité 46, et une position de déblocage, visible par exemple sur la figure 4, dans laquelle la première surface 74 d'appui est à distance de l'organe 30 d'entraînement pour permettre le libre déplacement de l'organe 30 d'entraînement à l'intérieur de l'alésage 28 radial.

L'organe 76 élastique de rappel est adapté pour rappeler la pièce 72 de blocage en position de blocage. Par exemple, l'organe 76 élastique de rappel est un ressort.

La pièce 72 de blocage peut avantageusement comprendre une deuxième surface 78 d'appui, contre laquelle est destinée à venir en appui la partie mâle 2, notamment une extrémité de la jupe 22, lors de son insertion dans la partie mâle 2, comme cela est visible notamment sur la figure 3, de sorte que l'insertion de la partie mâle 2 dans la partie femelle 4 déplace la pièce 72 de blocage de la position de blocage vers la position de déblocage, contre l'action de l'organe 76 élastique de rappel.

Comme on peut le voir sur les figures 1 à 17, la pièce 72 de blocage peut être disposée entre la portion tubulaire 10 extérieure et la pièce 24 d'entraînement, notamment la portion tiroir 26 de la pièce 24 d'entraînement.

Le fonctionnement du système 1 de connexion selon le mode de réalisation représenté sur les figures 1 à 17 est décrit ci-après, partant d'une situation initiale dans laquelle les parties mâle et femelle sont déconnectées (figures 1 et 2). La pièce 24 d'entraînement est en position de déconnexion, l'alésage 28 radial est en face de la deuxième cavité 46, l'organe 30 d'entraînement est dans la position intérieure, en appui contre le pan supérieur de la saillie 40 radiale, et ne dépasse pas de l'autre côté de l'alésage 28 radial. Le ressort 64 est comprimé. La pièce 72 de blocage est en position de blocage et maintient l'organe 30 d'entraînement en appui contre le pan 42 supérieur de la saillie 40 radiale, ce qui a également pour effet de maintenir la pièce 24 d'entraînement en position de déconnexion contre l'action du ressort 64.

La partie mâle 2 est d'abord positionnée sur la partie femelle 4, et plus précisément sur la pièce 72 de blocage (figure 3). L'extrémité de la jupe 22 est en contact avec la deuxième surface 78 d'appui de la pièce 72 de blocage.

Un utilisateur exerce une poussée sur la partie mâle 2, afin d'amorcer la cinématique de connexion (figure 4).

Par conséquent, la partie mâle 2 déplace la pièce 72 de blocage (figure 5). L'organe 76 élastique de rappel se comprime. La cavité 34 de la partie mâle 2 est déplacée en vis-à-vis de l'organe 30 d'entraînement, la première surface 74 d'appui cesse de maintenir l'organe 30 d'entraînement dans la deuxième cavité 46, la pièce 24 d'entraînement est débloquée.

A ce moment, l'effort humain qui consistait à pousser la partie mâle 2 peut cesser; la connexion devient automatique, la pièce 24 d'entraînement est déplacée vers la position de connexion sous l'effet des moyens de rappel.

Ce faisant, la pièce 24 d'entraînement entraîne l'organe 30 d'entraînement qui est chassé par la saillie 40 radiale dans la cavité 34 de la partie mâle 2 (figure 6).

L'organe 30 d'entraînement appuie conséquemment contre le pan 38 inférieur de la cavité 34 de la partie, si bien que l'effort exercé par les moyens de rappel est transmis à la partie mâle 2, qui est ainsi entraînée vers la position de connexion (figures 7 à 9), tractée par la pièce 24 d'entraînement.

Lorsque la pièce 24 d'entraînement ou la partie mâle 2 parvient en butée contre la surface 70 de butée, leur déplacement cesse (figure 10). La pièce 24 d'entraînement est dans la position de connexion, l'organe 30 d'entraînement est simultanément en appui contre le pan 38 inférieur de la cavité 34, le pan 44 inférieur de la saillie 40 radiale, et de ce fait, la partie mâle 2 est verrouillée dans la partie femelle 4 de façon sécurisée. Un retrait de la partie mâle 2 par traction de la partie mâle 2 n'est pas possible, compte-tenu notamment de l'agencement des pans 38, 44 inférieurs de la cavité 34 et de la saillie 40 radiale.

Pour déconnecter la partie mâle 2 de la partie femelle 4, il est nécessaire de pousser la pièce 24 d'entraînement vers sa position de déconnexion, contre l'action des moyens de rappel (voir figure 11). Cette poussée peut être réalisée au moyen d'un fluide sous pression dans la chambre 14 d'actionnement. Ce fluide, par exemple de l'air comprimé, exerce une force 50 de pression sur le piston 48 qui entraîne la pièce 24 d'entraînement vers la position de déconnexion. L'arrivée du fluide sous pression dans la chambre 14 d'actionnement est déclenchée par une commande générée par les moyens de commande, par exemple via le bouton 62 poussoir.

Ce faisant, l'organe 30 d'entraînement est de nouveau chassé dans la cavité 34 de la partie mâle 2, où l'organe 30 d'entraînement vient en appui contre un pan 36 supérieur de la cavité 34, si bien que la partie mâle 2 est entraînée par la pièce 24 d'entraînement, sous l'effet de la force de pression exercée par le piston 48, auquel s'ajoute celui de l'organe 76 élastique de rappel plaquant la deuxième surface 78 d'appui contre la partie mâle 2 (figures 12 à 17). La partie mâle 2 peut être déconnectée de la partie femelle 4.

Selon un deuxième mode de réalisation, illustré sur les figures 18 à 25, les moyens de blocage comprennent une source 80 d'énergie, par exemple un compresseur, représentée schématiquement sur la figure 18, cette source 80 d'énergie étant reliée à la chambre 14 d'actionnement du système 1 de connexion pour faire circuler dans cette chambre 14 d'actionnement un fluide, notamment de l'air, destiné à exercer sur le piston 48 une force de pression opposée et supérieure à une force de rappel exercée par les moyens de rappel sur la pièce 24 d'entraînement.

Les figures 18 à 25 montrent des étapes successives de la cinématique de connexion de la partie mâle 2 et de la partie femelle 4 du système 1 de connexion selon ce deuxième mode de réalisation.

Cette cinématique est similaire à celle décrite en lien avec le premier mode de réalisation des figures 1 à 17, à ceci près que la pièce 24 d'entraînement est initialement maintenue dans la position de déconnexion (figure 18) par une force de pression 50 exercée en continu sur le piston 48, par l'intermédiaire de la source 80 d'énergie, contre l'action des moyens de rappel.

Dès qu'un signal de commande est généré par les moyens de commande, cette force de pression cesse d'être appliquée au piston 48, si bien que la pièce 24 d'entraînement se déplace jusqu'à la position de connexion sous l'action des moyens de rappel, et tracte la partie mâle 2 jusqu'à ce que la partie mâle 2 soit verrouillée dans la partie femelle 4, comme cela a été décrit en lien avec le premier mode de réalisation.

Le signal de commande peut ici être généré par le capteur 60, ce capteur pouvant détecter le positionnement initial de la partie mâle 2 contre la partie femelle 4, notamment contre une surface 82 d'appui de la portion tiroir 26, comme illustré sur la figure 18.

Ainsi, il suffit de poser la partie mâle 2 sur la partie femelle 4 pour déclencher la cinématique de connexion.

La déconnexion peut être commandée par l'actionnement du bouton 62 poussoir, qui commande l'arrivée d'un fluide sous pression dans la chambre 14 d'actionnement, si bien qu'une force de pression opposée à la force de rappel provoque le déplacement de la pièce 24 d'entraînement de la position de connexion vers la position de connexion, en déverrouillant la partie mâle 2 et la partie femelle 4, comme cela a été décrit pour le premier mode de réalisation.

Ainsi, dans l'hypothèse où le premier dispositif est un fond de moule donnant sa forme à un récipient et que le deuxième dispositif est une sellette, il est possible d'interchanger rapidement et de façon sécurisée le fond de moule en le déconnectant puis en en connectant un différent, du fait du caractère automatique, c'est-à-dire sans effort humain ou avec effort humain limité, des cinématiques de connexion et déconnexion des parties mâle et femelle.

La présente invention trouve plus généralement son application dans la connexion et le verrouillage de coupleurs hydrauliques, pneumatiques et dans le domaine des connecteurs d'énergie.

Ainsi, l'organe 30 d'entraînement peut être un rouleau au lieu d'une bille.

Ainsi, la force de rappel exercée par les moyens de rappel peut être remplacée par une force de pression exercée sur le piston 48.

Ainsi, le ressort 64 peut être configuré pour rappeler la pièce 24 d'entraînement en position de déconnexion plutôt qu'en position de connexion, tandis que la chambre 14 d'actionnement et le piston 48 peuvent être configurés pour que le piston 48 soit déplacé en position de connexion par une force de pression.

## Revendications

1. Système (1) de connexion pour connecter deux dispositifs avec communication fluidique entre les deux dispositifs, le système (1) de connexion comprenant
une partie mâle (2) pouvant être raccordée à un premier dispositif parmi les deux dispositifs, et une partie femelle (4) pouvant être raccordée à un deuxième dispositif parmi les deux dispositifs,
une pièce (24) d'entraînement présentant une portion tiroir (26) munie d'un alésage (28) radial, et un organe (30) d'entraînement mobile radialement à l'intérieur de l'alésage (28) radial,
une cavité (34), agencée sur l'une des parties parmi la partie mâle (2) et la partie femelle (4), et une saillie (40) radiale, agencée sur l'autre des parties parmi la partie mâle (2) et la partie femelle (4),
la saillie (40) radiale étant conçue pour chasser l'organe (30) d'entraînement dans la cavité (34) au cours d'une translation de la pièce (24) d'entraînement, afin de mettre en appui l'organe (30) d'entraînement contre un pan de la cavité (34),
la pièce (24) d'entraînement étant mobile en translation selon une direction sensiblement parallèle à un axe d'insertion de la partie mâle (2) dans la partie femelle (4), entre une position de déconnexion dans laquelle l'organe (30) d'entraînement est en appui contre un premier côté de la saillie (40) radiale et à distance de la cavité (34) pour autoriser la déconnexion de la partie mâle (2) et de la partie femelle (4), et une position de connexion dans laquelle l'organe (30) d'entraînement est en appui contre un deuxième côté de la saillie (40) radiale et simultanément en appui contre un pan (38) de la cavité (34) afin de bloquer la partie mâle (2) dans la partie femelle (4),
dans lequel la pièce (24) d'entraînement comprend un piston (48) conçu pour coulisser dans une chambre (14) d'actionnement du système (1) de connexion sous l'effet d'une force de pression exercée par un fluide sur ledit piston (48), le piston (48) étant rattaché à la portion tiroir (26) de manière à déplacer la pièce (24) d'entraînement jusqu'à l'une des positions parmi la position de connexion et la position de déconnexion sous l'effet de ladite force de pression, le système (1) de connexion comprenant en outre des moyens de commande pour déclencher l'application de ladite force de pression sur le piston (48),
dans lequel le système (1) de connexion comprend des moyens de rappel conçus pour rappeler la pièce (24) d'entraînement jusqu'à l'une des positions parmi la position de connexion et la position de déconnexion, de sorte que la translation de la pièce (24) d'entraînement sous l'action de ladite force de rappel provoque un déplacement simultané de la partie mâle (2) par rapport à la partie femelle (4),
**caractérisé en ce que**
le système (1) de connexion comprenant en outre des moyens de blocage conçus pour bloquer la pièce (24) d'entraînement dans l'une des positions, parmi la position de connexion et la position de déconnexion, autre que celle dans laquelle la pièce (24) d'entraînement tend à être rappelée par les moyens de rappel,
les moyens de blocage comprennent une pièce (72) de blocage, présentant une première surface (74) d'appui, la pièce (72) de blocage étant mobile entre une position de blocage, dans laquelle la première surface (74) d'appui est en appui contre l'organe (30) d'entraînement pour bloquer l'organe (30) d'entraînement contre le premier côté de la saillie (40) radiale, et une position de déblocage, dans laquelle la première surface (74) d'appui est à distance de l'organe (30) d'entraînement pour permettre le libre déplacement de l'organe (30) d'entraînement à l'intérieur de l'alésage (28) radial, et un organe (76) élastique de rappel pour rappeler la pièce (72) de blocage en position de blocage.

2. Système (1) de connexion selon la revendication 1, dans lequel les moyens de rappel comprennent un ressort (64) adapté pour rappeler la pièce (24) d'entraînement dans la position de connexion.

3. Système (1) de connexion selon la revendication 1 ou 2, dans lequel la pièce (72) de blocage comprend une deuxième surface (78) d'appui contre laquelle est destinée à venir en appui la partie mâle (2) lors de son insertion dans la partie femelle (4), en vue de déplacer la pièce (72) de blocage de la position de blocage à la position de déblocage.

4. Système (1) de connexion selon l'une des revendications 1 à 3, dans lequel les moyens de commande comprennent un capteur conçu pour générer un signal de commande en vue de commander une arrivée ou une sortie d'un fluide à l'intérieur de la chambre (14) d'actionnement dès que la partie mâle (2) est positionnée en appui contre la partie femelle (4).

5. Système (1) de connexion selon l'une des revendications 1 à 4, dans lequel les moyens de commande comprennent un bouton poussoir destiné à commander une arrivée ou une sortie d'un fluide à l'intérieur de la chambre (14) d'actionnement.

6. Système (1) de connexion selon l'une des revendications 1 à 5, dans lequel la cavité (34) comprend un pan incliné formant avec l'horizontale un premier angle (α) supérieur à 45° et la saillie (40) radiale comprend un pan incliné opposé au pan incliné de la saillie (40) radiale et formant avec la verticale un deuxième angle (β) supérieur à 0°.

## Patentansprüche

1. Verbindungssystem (1) zum Verbinden zweier Vorrichtungen mit Fluidverbindung zwischen den beiden Vorrichtungen, wobei das Verbindungssystem (1) Folgendes umfasst
einen Steckteil (2), der an eine erste Vorrichtung aus den beiden Vorrichtungen angeschlossen werden kann, und einen Buchsenteil (4), der an eine zweite Vorrichtung aus den beiden Vorrichtungen angeschlossen werden kann,
ein Antriebsteil (24), das einen Einschubabschnitt (26) aufweist, der mit einer radialen Bohrung (28) versehen ist, und ein Antriebselement (30), das radial in dem Inneren der radialen Bohrung (28) beweglich ist,
einen Hohlraum (34), der auf einem der Teile aus dem Steckteil (2) und dem Buchsenteil (4) eingerichtet ist, und einen radialen Vorsprung (40), der auf dem anderen der Teile aus dem Steckteil (2) und dem Buchsenteil (4) eingerichtet ist,
wobei der radiale Vorsprung (40) konzipiert ist, um das Antriebselement (30) in dem Hohlraum (34) im Laufe einer Verschiebung des Antriebsteils (24) zu verdrängen, um das Antriebselement (30) gegen eine Bahn des Hohlraums (34) in Auflage zu bringen,
wobei das Antriebsteil (24) entlang einer Richtung im Wesentlichen parallel zu einer Einfügeachse des Steckteils (2) in den Buchsenteil (4) zwischen einer Löseposition, in der das Antriebselement (30) gegen eine erste Seite des radialen Vorsprungs (40) in Auflage und von dem Hohlraum (34) entfernt ist, um das Lösen des Steckteils (2) und des Buchsenteils (4) zu gestatten, und einer Verbindungsposition, in der das Antriebselement (30) gegen eine zweite Seite des radialen Vorsprungs (40) in Auflage und gleichzeitig in Auflage gegen eine Bahn (38) des Hohlraums (34) ist, um den Steckteil (2) in dem Buchsenteil (4) zu blockieren, in Verschiebung beweglich ist,
wobei das Antriebsteil (24) einen Kolben (48) umfasst, der konzipiert ist, um in einer Betätigungskammer (14) des Verbindungssystems (1) unter der Einwirkung einer Druckkraft zu gleiten, die von einem Fluid auf den Kolben (48) ausgeübt wird, wobei der Kolben (48) mit dem Einschubabschnitt (26) derart verbunden ist, dass er das Antriebsteil (24) bis zu einer der Positionen aus der Verbindungsposition und der Löseposition unter der Wirkung der Druckkraft verlagert, wobei das Verbindungssystem (1) außerdem Steuermittel zum Auslösen des Anlegens der Druckkraft auf den Kolben (48) umfasst,
wobei das Verbindungssystem (1) Rückstellmittel umfasst, die konzipiert sind, um das Antriebsteil (24) bis zu einer der Positionen aus der Verbindungsposition und der Löseposition derart zurückzustellen, dass die Verschiebung des Antriebsteils (24) unter der Einwirkung der Rückstellkraft eine gleichzeitige Verlagerung des Steckteils (2) bezüglich des Buchsenteils (4) bewirkt,
**dadurch gekennzeichnet, dass**
das Verbindungssystem (1) außerdem Blockierungsmittel umfasst, die konzipiert sind, um das Antriebsteil (24) in einer anderen der Positionen aus der Verbindungsposition und der Löseposition, als der in der das Antriebsteil (24) tendiert, von den Rückstellmitteln zurückgestellt zu werden, zu blockieren,
wobei die Blockierungsmittel ein Blockierungsteil (72) umfassen, das eine erste Auflageoberfläche (74) aufweist, wobei das Blockierungsteil (72) zwischen einer Blockierungsposition, in der die erste Auflageoberfläche (74) in Auflage gegen das Antriebselement (30) ist, um das Antriebselement (30) gegen die erste Seite des radialen Vorsprungs (40) zu blockieren, und einer Freigabeposition, in der die erste Auflageoberfläche (74) von dem Antriebselement (30) entfernt ist, um die freie Verlagerung des Antriebselements (30) in dem Inneren der radialen Bohrung (28) zu erlauben, beweglich ist, und ein elastisches Rückstellelement (76), um das Blockierungsteil (72) in Blockierungsposition zurückzustellen.

2. Verbindungssystem (1) nach Anspruch 1, wobei die Rückstellmittel eine Feder (64) umfassen, die angepasst ist, um das Antriebsteil (24) in die Verbindungsposition zurückzustellen.

3. Verbindungssystem (1) nach Anspruch 1 oder 2, wobei das Blockierungsteil (72) eine zweite Auflageoberfläche (78) umfasst, gegen die der Steckteil (2) bestimmt ist, bei seinem Einfügen in den Buchsenteil (4) zur Auflage zu kommen, um das Blockierungsteil (72) von der Blockierungsposition zu der Freigabeposition zu verlagern.

4. Verbindungssystem (1) nach einem der Ansprüche 1 bis 3, wobei die Steuermittel einen Fühler umfassen, der konzipiert ist, um ein Steuersignal zu erzeugen, um ein Eintreten oder Austreten eines Fluids in das Innere/aus dem Inneren der Betätigungskammer (14) zu steuern, sobald der Steckteil (2) in Auflage gegen den Buchsenteil (4) positioniert ist.

5. Verbindungssystem (1) nach einem der Ansprüche 1 bis 4, wobei die Steuermittel einen Druckknopf umfassen, der dazu bestimmt ist, ein Eintreten oder ein Austreten eines Fluids in das Innere/aus dem Inneren der Betätigungskammer (14) zu steuern.

6. Verbindungssystem (1) nach einem der Ansprüche 1 bis 5, wobei der Hohlraum (34) eine schräge Bahn umfasst, die mit der Waagerechten einen ersten Winkel (α), der größer ist als 45°, bildet, und der radiale Vorsprung (40) eine schräge Bahn umfasst, die der schrägen Bahn des radialen Vorsprungs (40) entgegengesetzt ist und mit der Senkrechten einen zweiten Winkel (β), der größer ist als 0°, bildet.

## Claims

1. A connection system (1) for connecting two devices with a fluidic communication between the two devices, the connection system (1) comprising
a male portion (2) which can be joined to a first device amongst the two devices, and a female portion (4) which can be joined to a second device amongst the two devices,
a drive part (24) having a drawer portion (26) provided with a radial bore (28), and a radially movable drive member (30) inside the radial bore (28),
a cavity (34), arranged on one of the portions amongst the male portion (2) and the female portion (4), and a radial protrusion (40), arranged on the other one of the portions amongst the male portion (2) and the female portion (4),
the radial protrusion (40) being designed to expel the drive member (30) into the cavity (34) during a translation of the drive part (24), in order to press the drive member (30) against a sidewall of the cavity (34),
the drive part (24) being movable in translation according to a direction substantially parallel to an axis of insertion of the male portion (2) into the female portion (4), between a disconnection position in which the drive member (30) bears against a first side of the radial protrusion (40) and spaced from the cavity (34) to authorize the disconnection of the male portion (2) and the female portion (4), and a connection position in which the drive member (30) bears against a second side of the radial protrusion (40) and simultaneously bears against a sidewall (38) of the cavity (34) in order to block the male portion (2) in the female portion (4),
wherein the drive part (24) comprises a piston (48) designed to slide in a chamber (14) for actuating the connection system (1) under the effect of a pressing force exerted by a fluid on said piston (48), the piston (48) being attached to the drawer portion (26) so as to displace the drive part (24) up to one of the positions amongst the connection position and the disconnection position under the effect of said pressing force, the connection system (1) further comprising control means for triggering the application of said pressing force on the piston (48),
wherein the connection system (1) comprises return means designed to return the drive part (24) to one of the positions amongst the connection position and the disconnection position, so that the translation of the drive part (24) under the action of said return force causes a simultaneous displacement of the male portion (2) relative to the female portion (4),
**characterized in that**
the connection system (1) further comprising blocking means designed to block the drive part (24) in one of the positions, amongst the connection position and the disconnection position, other than that in which the drive part (24) tends to be returned by the return means,
the blocking means comprise a blocking part (72), having a first bearing surface (74), the blocking part (72) being movable between a blocking position, in which the first bearing surface (74) bears against the drive member (3) to block the drive member (30) against the first side of the radial protrusion (40), and an unblocking position, in which the first bearing surface (74) is spaced from the drive member (30) to enable the free displacement of the drive member (30) inside the radial bore (28), and an elastic return member (76) to return the blocking part (72) to the locking position.

2. The connection system (1) according to claim 1, wherein the return means comprise a spring (64) adapted to return the drive member (24) into the connection position.

3. The connection system (1) according to claim 1 or 2, wherein the blocking part (72) comprises a second bearing surface (78) against which the male portion (2) is intended to bear during its insertion into the female portion (4), in order to displace the blocking part (72) from the blocking position to the unblocking position.

4. The connection system (1) according to any of claims 1 to 3, wherein the control means comprises a sensor designed to generate a control signal in order to control an inlet or an outlet of a fluid inside the actuation chamber (14) as soon as the male portion (2) is positioned to bear against the female portion (4).

5. The connection system (1) according to any of claims 1 to 4, wherein the control means comprise a push button intended to control an inlet or an outlet of a fluid inside the actuation chamber (14).

6. The connection system (1) according to any of claims 1 to 5, wherein the cavity (34) comprises an inclined sidewall forming with the horizontal a first angle (α) larger than 45° and the radial protrusion (40) comprises an inclined sidewall opposed to the inclined sidewall of the radial protrusion (40) and forming, with the vertical, a second angle (β) larger than 0°.
